# EUROPÄISCHE PATENTANMELDUNG

(11) **EP 1 439 137 A1**
(43) Veröffentlichungstag der Anmeldung: **21.07.2004**
(21) Anmeldenummer: 04000393.1
(22) Anmeldetag: 10.01.2004
(51) Int. Cl.: B65G 15/02

(54) **Kurvengurt für einen Bandförderer**

(30) Priorität: 17.01.2003 DE 10301539
(71) Anmelder: Ammeraal Beltech GmbH, 21502 Geesthacht (DE)
(72) Erfinder: Goertz, Dieter, 41747 Viersen (DE)
(74) Vertreter: Jaeschke, Rainer, Dipl.-Ing.

(57) **Zusammenfassung**

Die Erfindung betrifft einen Kurvengurt für einen Bandförderer mit einem um winklig zueinander angeordnete Tragrollen (12,13,14) geführten Endlosgurt (11), der zumindest auf seiner der Tragseite abgekehrten inneren Flachseite (15) mit wenigstens einem Zahnriemen (16) verbunden ist, der mit wenigstens einer Zahnscheibe (17) zum Antreiben des Endlosgurtes kämmt, welcher Endlosgurt zumindest auf der inneren Flachseite (21) mit wenigstens einem Führungsvorsprung (19,20) vorsehen ist, der sich entlang des Endlosgurtes erstreckt und an dem radial nach außen wirkende Spannrollen (24) angreifen, um den Endlosgurt auf den Tragrollen (12,13,14) zu halten. Gemäß der Erfindung wird vorgeschlagen, dass der Führungsvorsprung (19,20) in radialer Richtung der Kurve weiter außen liegt als der Zahnriemen (16).

## Beschreibung

Die Erfindung betrifft ein Kurvengurt für einen Bandförderer mit einem um winklig zueinander angeordnete Tragrollen geführten Endlosgurt, der zumindest auf seiner der Tragseite abgekehrten inneren Flachseite mit wenigstens einem Zahnriemen verbunden ist, der mit wenigstens einer Zahnscheibe zum Antreiben des Endlosgurtes kämmt, welcher Endlosgurt zumindest auf der inneren Flachseite oder auf der äußeren Flachseite mit wenigstens einem Führungsvorsprung versehen ist, der sich entlang des Endlosgurtes erstreckt und dem radial nach außen wirkende Spannrollen angreifen, um den Endlosgurt auf den Tragrollen zu halten.

Derartige Bandförderer dienen zum Transportieren von Gegenständen. Im allgemeinen handelt es sich bei dem Band um einen endlosen Gurt, der über endständige und angetriebene Antriebsrollen und dazwischenliegende Tragrollen geführt ist. Im Zuge der immer weiter reichenden Automatisierung von Produktions- und Förderanlagen ist es teilweise auch erforderlich, die Gegenstände nicht nur linear, sondern auch entlang einer Kurve zu transportieren. Es ist offensichtlich, dass ein derartiger Transport eines Gegenstands um eine Kurve nicht ohne weiteres mit herkömmlichen Endlosgurten zu bewerkstelligen ist.

Es ist aus der DE-G 93 17 675 ein Kurvengurt für derartige Bandförderer bekannt, der einen Transport eines Gegenstands um eine Kurve, beispielsweise um 90°, ermöglicht. Der Kurvengurt besteht aus einem um konische oder zylindrische Walzen geführten Endlosgurt, der auf seiner der Tragseite abgekehrten Innenseite mit einem Zahnriemen versehen ist. Der Zahnriemen ist dabei auf dem Endlosgurt aufgeklebt oder aufgeschweißt und weist keine Zugträger in Längsrichtung auf. Aus der DE 199 43 985 Al ist ebenfalls ein Kurvengurt für einen Bandförderer bekannt, dessen Zahnriemen mit einem Zugträger in Längsrichtung versehen ist. Damit können die teilweise sehr hohen Zugkräfte gut aufgenommen werden.

Aufgrund der Geometrie und der Bewegung eines derartigen Kurvengurtes wirken stets Kräfte in radialer Richtung nach innen auf das Zentrum der Kurve. Es ist daher erforderlich, diese Kräfte aufzunehmen, damit der Endlosgurt nicht nach innen rutscht und somit den Kontakt zu den Tragrollen oder Antriebsrollen verliert.

Es ist beispielsweise aus der AT-PS 355 983 bekannt, auf der Innenseite des Zahnriemens eine Flanke vorzusehen, an der Stützscheiben angreifen, um den Zahnriemen und somit den Endlosgurt nach außen zu drücken. Aus der bereits zitierten DE-G 93 17 675 ist es bekannt, neben dem Zahnriemen ein Führungsprofil vorzusehen, an den radial nach außen wirkende Spannrollen angreifen. Das Führungsprofil befindet sich auf der radial inneren Seite des Zahnriemens in Bezug auf die Kurve. Schließlich offenbart die DE 298 24 217 U1 einen Gurtbandförderer, dessen Kurvengurt mit einem oberen und unteren Wust versehen ist, an denen schrägstehende Führungsrollen anliegen. Im einzelnen ist die Anordnung so getroffen, dass die Wulste auf der radial inneren Seite des Zahnriemens in Bezug auf die Kurve angeordnet sind.

Durch diese Anordnung wird erreicht, dass der Zahnriemen frei von Kräften ist. Damit soll der Verschleiß herabgesetzt werden können. Allerdings hat sich gezeigt, dass bei einem derartigen kräftefreien äußeren Rand des Kurvengurtes dieser dazu neigt, sich von den Tragrollen wegzubiegen. Der Zahnriemen kann dann nicht mehr richtig mit der Zahnscheibe kämmen, so dass ein sicherer Betrieb nicht gewährleistet ist. Es ist daher weiterhin aus der DE 298 24 217 U1 bekannt, entlang der oberen Flachseite des Endlosgurtes Niederhalter vorzusehen, die ein derartiges Aufbiegen verhindern sollen. Es ist offensichtlich, dass hierdurch der Verschleiß des Endlosgurtes im Bereich der Niederhalter wesentlich erhöht wird.

Der Erfindung liegt die Aufgabe zu Grunde, einen Kurvengurt der eingangs geschilderten Art so auszubilden, dass ein besseres Laufverhalten auf den Tragrollen bewirkt wird. Insbesondere soll ein einwandfreies Kämmen des Zahnriemens mit den Zahnscheiben erreicht werden.

Die Aufgabe wird gemäß der Erfindung dadurch gelöst, dass der Führungsvorsprung auf der inneren oder äußeren Flachseite des Endlosgurts in radialer Richtung der Kurve weiter außen liegt als der Zahnriemen. Dadurch wird erreicht, dass der Zahnriemen stets unter einer gewissen Zugspannung oder Vorspannung gehalten wird. Diese Zugspannung führt dazu, dass ein Abheben des Zahnriemens unterdrückt wird. Der Zahnriemen kämmt somit sicher mit der Zahnscheibe, so dass ein störungsfreier Betrieb ermöglicht wird.

Es ist grundsätzlich zweckmäßig, auf beiden Flachseiten des Endlosgurtes Führungsvorsprünge anzuordnen. Damit wird eine besonders sichere Führung des Endlosgurtes um die Kurve erreicht.

Es kann vorgesehen werden, dass der oder die Führungsvorsprünge am äußeren Randbereich des Endlosgurtes angeordnet sind. Der Zahnriemen zum Antreiben des Endlosgurtes befindet sich dann radial weiter innen am Endlosgurt. Dabei wird die Breite des Endlosgurtes relativ zur Gesamtbreite des Förderers zum Transport der Gegenstände durch die oberen Spannrollen auf der Tragseite nicht wesentlich verkleinert. Weiterhin weisen die Führungsvorsprünge und auch der Zahnriemen nur eine geringe Krümmung auf, wie es für eine sicheres Kämmen mit der oder den Zahnscheiben erforderlich ist.

wie der Führungsvorsprung oder die Führungsvorsprünge mit dem Endlosgurt verbunden sind, ist grundsätzlich beliebig. Es kann vorgesehen werden, dass die Führungsvorsprünge angenäht, angeschweißt oder aufgeklebt sind.

Weiterhin ist die Lage des Führungsvorsprunges relativ zum Zahnriemen beliebig, solange sich der Führungsvorsprung radial weiter außen befindet als der Zahnriemen. Es kann beispielsweise vorgesehen werden, dass der Führungsvorsprung mit einem relativ zur Breite des Endlosgurtes geringen Abstand zum Zahnriemen verläuft oder unmittelbar an diesen anschließt.

Auch kann vorgesehen werden, dass der Führungsvorsprung mit dem Zahnriemen einstückig ausgebildet ist. Dabei ist es zweckmäßig, wenn zwischen Führungsvorsprung und Verzahnung des Zahnriemens eine Nut entlang der Längserstreckung des Zahnriemens verläuft. Dadurch wird erreicht, dass bei geringen radialen Verschiebungen eine Kollision zwischen Verzahnung der Zahnscheibe und dem Führungsvorsprung vermieden wird. Auch wird durch die Nut zwischen Führungsvorsprung einerseits und Zahnriemen andererseits eine elastische Verbindung bewirkt, so dass Ausgleichbewegungen stattfinden können. Damit können Spannungsspitzen, beispielsweise bei ungenau ausgerichteten Spannrollen und/oder Zahnscheiben ausgeglichen werden.

Weiterhin kann vorgesehen werden, dass die Führungsvorsprünge auf der äußeren und inneren Flachseite des Endlosgurtes einstückig ausgebildet sind. Die Führungsvorsprünge können dabei eine parallel zu den Flachseiten des Endlosgurtes verlaufende Nut aufweisen, mit der die Führungsvorsprünge auf den Endlosgurt aufgesteckt werden. Auch kann vorgesehen werden, dass die Führungsvorsprünge miteinander vernäht, verklebt, verschweißt oder vernietet sind und den Endlosgurt zwischen sich einschließen.

Wie die Spannrollen in Bezug auf den Endlosgurt ausgerichtet sind, ist grundsätzlich beliebig. Es kann vorgesehen werden, dass der Führungsvorsprung auf der inneren Flachseite des Endlosgurtes eine Flanke aufweist, an der die Spannrollen angreifen und die in einen Winkel zwischen 30° und 90° zur Flachseite des Endlosgurtes verläuft. Bei einem Winkel von 90° wirken die Spannrollen parallel zur Flachseite des Endlosgurtes. Bei einem Winkel zwischen 30° und 90° wird auch eine Kraftkomponente von den Tragrollen weg erzeugt. Dann ist es erforderlich den Endlosgurt auch von oben durch entsprechende Spannrollen abzustützen. Grundsätzlich kann diese Abstützung von oben auch durch Gleitelemente erfolgen.

Der Führungsvorsprung auf der äußeren Flachseite des Endlosgurtes kann ebenfalls eine Flanke aufweisen, an der die Spannrollen angreifen und die in einem Winkel zwischen 0° und 90° zur Flachseite des Endlosgurtes verläuft. Bei einem Winkel von 90° wirkt die Spannrolle parallel zur Flachseite des Endlosgurtes. Diese Anordnung kann dann zweckmäßig sein, wenn auch die Spannrolle für den Führungsvorsprung auf der inneren Flachseite parallel zur Flachseite des Endlosgurtes verläuft, also dass die Flanke des Führungsvorsprungs auf der inneren Flachseite in einem 90° Winkel zur Flachseite des Endlosgurtes angeordnet ist. Bei einem Winkel von 0° wirken die Spannrollen senkrecht zur Flachseite des Endlosgurtes und bewirken somit nur ein Niederdrücken desselben in Richtung auf die Tragrollen.

Es kann vorgesehen werden, dass die Flanken sowohl des oberen als auch des unteren Führungsvorsprungs in einem schrägen Winkel zum Endlosgurt verlaufen, wobei die Spannrollen entsprechend ausgerichtet sind. Damit wird eine Zentrierung des Endlosgurtes zwischen den Spannrollen erreicht, wobei der Zahnriemen nach wie vor mit Querkräften in radialer Richtung der Kurve beaufschlagt ist, so dass ein einwandfreies Kämmen desselben mit der Zahnscheibe oder den Zahnscheiben bewirkt wird. Alternativ kann vorgesehen werden, dass die Flanken sowohl des oberen als auch des unteren Führungsvorsprungs senkrecht zum Endlosgurt verlaufen, wobei die Spannrollen parallel zur Flachseite ausgerichtet sind und um eine Achse senkrecht zur Flachseite drehen. Dann wirken durch die Spannrollen nur radiale Spannkräfte auf den Gurt. In beiden Fällen ist es zweckmäßig, wenn die Flanken der Führungsvorsprünge symmetrisch zum Endlosgurt ausgerichtet sind.

Der Führungsvorsprung auf der äußeren Flachseite des Endlosgurtes kann dem Führungsvorsprung auf der inneren Flachseite gegenüber liegen. Es kann aber auch vorgesehen werden, dass der Führungsvorsprung auf der äußeren Flachseite zu dem Führungsvorsprung auf der inneren Flachseite des Endlosgurtes versetzt verläuft. Der Führungsvorsprung auf der äußeren Flachseite des Endlosgurtes kann beispielsweise zumindest teilweise dem Zahnriemen gegenüber liegen. Dadurch wird bei schrägen Spannrollen und einer entsprechend schrägen Flanke des Führungsvorsprungs auf der äußeren Flachseite erreicht, dass eine Kraftkomponente den Zahnriemen im wesentlichen unmittelbar auf die Tragrollen drückt. Dieser Effekt wird auch dann erreicht, wenn die Flanke des Führungsvorsprunges parallel zur Flanke des Endlosgurtes verläuft. Auch damit wird gewährleistet, dass der Zahnriemen in die Verzahnung gedrückt wird, so dass ein einwandfreier Betrieb möglich ist.

Die Erfindung wird im folgenden anhand der schematischen Zeichnung näher erläutert. Es zeigen:

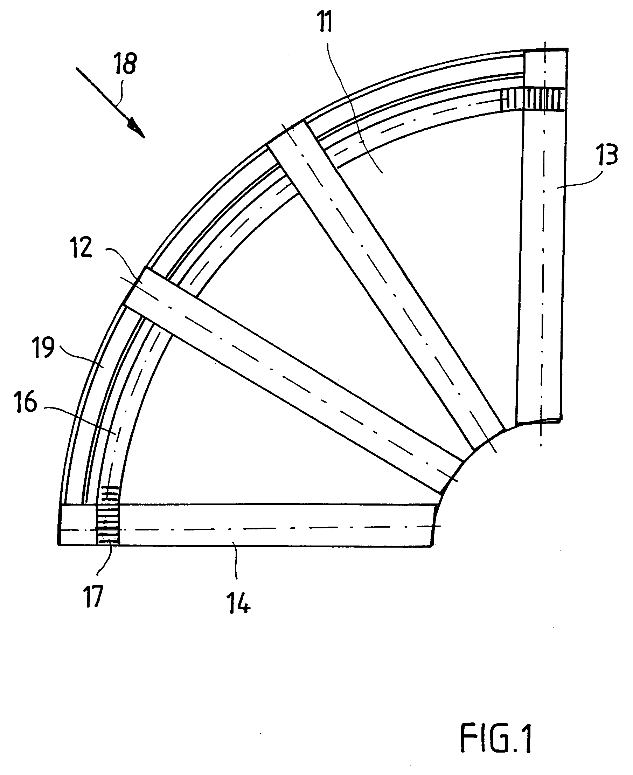

- Fig. 1: die Untersicht eines Kurvengurts,
- Fig. 2: den Querschnitt durch den Obertrum eines Kurvengurts gemäß der Erfindung,
- Fig. 3: den Querschnitt durch den Obertrum eines Kurvengurts gemäß einer anderen Ausführungsform der Erfindung und
- Fig. 4: den Querschnitt durch den Obertrum eines Kurvengurts gemäß einer weiteren Ausführungsform der Erfindung.

Der in der Zeichnung dargestellte Kurvengurt für einen Bandförderer weist einen Endlosgurt 11 auf, der über mehrere winklig zueinander angeordnete Tragrollen 12 geführt ist. Bei dem in der Zeichnung dargestellten Ausführungsbeispiel stehen die endständigen Tragrollen 13, 14 in einem Winkel von 90° zueinander. Selbstverständlich können auch andere Kurvenwinkel gefahren werden. Die Tragrollen 12, 13, 14 sind drehbar an einem nicht gezeigten Maschinenrahmen gelagert, wobei zumindest eine Tragrolle und vorzugsweise eine endständige Tragrolle, beispielsweise die Tragrolle 13 und/oder 14 mit einem Antrieb zusammenwirkt und als Antriebsrolle ausgebildet ist.

Der Endlosgurt 11 ist auf seiner inneren und beim Obertrum unteren Flachseite 15 mit einem Zahnriemen 16 versehen, der entlang dem Endlosgurt und somit entlang der Kurve verläuft. Der Zahnriemen 16 weist eine Verzahnung auf, die mit einer Zahnscheibe 17 kämmt, die zumindest auf einer der angetriebenen Tragrollen sitzt. Es kann auch vorgesehen werden, dass lediglich die Zahnscheibe 17 angetrieben ist, während die Tragrollen unabhängig von der Zahnscheibe auf einer Achse drehbar gelagert sind. In der Zeichnung sind die Tragrollen und Antriebsrollen als einfache zylindrische Walzen dargestellt. Es ist zweckmäßig, wenn die Tragrollen 12 und Antriebsrollen 13, 14 in deren axialer Richtung unterteilt ausgebildet sind. Es kann aber auch vorgesehen werden, dass die Trag- und Antriebsrollen als konische Walzen ausgebildet sind. Mit beiden Maßnahmen werden die verschiedenen Umfangsgeschwindigkeiten des Endlosgurtes bei unterschiedlichen Radien der Kurve aufgenommen. Insoweit entspricht der dargestellte Kurvengurt einem herkömmlichen Kurvengurt und bedarf keiner weiteren Erläuterung.

Aufgrund der Geometrie und der Bewegung eines derartigen Endlosgurtes wirken stets radiale Kräfte in Richtung des Pfeils 18 auf die Kurvenmitte hin. Diese Kräfte bewegen den Endlosgurt 11 nach innen, so dass dieser ohne weitere Maßnahmen nicht auf den Tragrollen 12, 13, 14 verbleibt. Es sind daher Führungsmittel vorgesehen, die eine radial nach außen wirkende Kraft auf den Endlosgurt aufbringen können.

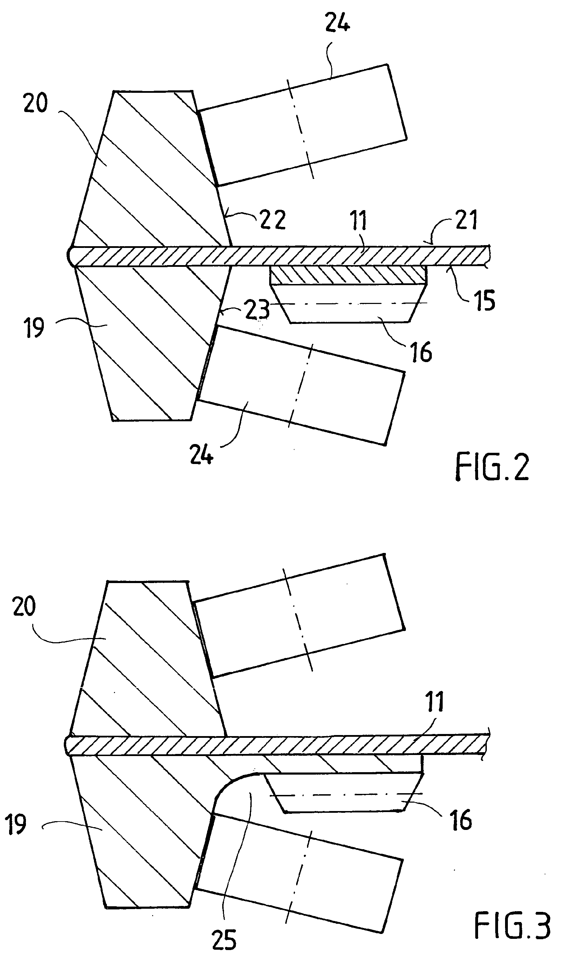

Die Führungsmittel umfassen bei dem Ausführungsbeispiel gemäß Figur 2 einen Führungsvorsprung 19 auf der inneren und beim Obertrum unteren Flachseite 15 und einen Führungsvorsprung 20 auf der äußeren und beim Obertrum oberen Flachseite 21 des Endlosgurtes. Beim Untertrum des Gurts verläuft der äußere Führungsvorsprung unterhalb und der innere Führungssprung oberhalb des Gurts. Die Führungsvorsprünge befinden sich im radial äußeren Bereich 22 des Endlosgurtes und in radialer Richtung weiter außen in Bezug auf den Zahnriemen 16. Die Führungsvorsprünge 19, 20 sind mit schräg stehenden Flanken 22, 23 versehen, an welche schräg stehende Spannrollen 24 angreifen. Die Umfangsfläche der Spannrollen 24 verlaufen dabei parallel zu den Flanken 22, 23 der Führungsvorsprünge 19, 20. Es können aber auch ballige Spannrollen eingesetzt werden. Auch ist es möglich, anstelle einer geraden Flanke eine gekrümmte und vorzugsweise in Bezug auf den Vorsprung konvexe Oberfläche vorzusehen oder den Vorsprung als ballige Wulst auszubilden. Insbesondere dann kann der Winkel der Spannrollen im Betrieb verändert und optimiert werden.

Durch die Spannrollen wird insbesondere eine radial nach außen wirkende Kraft auf den Endlosgurt 11 eingeleitet. Auch wird der Gurt über die Antriebsrollen radial nach außen gezogen, wodurch der Endlos aufgrund der winkligen Anstellung der Rollen eine Zugspannung erfährt. Dann kann der Endlosgurt auf den Tragrollen 12, 13, 14 sicher gehalten werden. Aufgrund des schrägen Verlaufs der Flanken 22, 23 wird der Endlosgurt 11 weiterhin zwischen zwei gegenüberliegenden Spannrollen 24 zentriert.

Durch diese Maßnahme wird erreicht, dass auch der Zahnriemen 16 unter Vorspannung in radialer Richtung und auch in Längsrichtung gehalten wird. Dies hat den Vorteil, dass ein Aufbiegen des Endlosgurtes 11 im äußeren Bereich vermieden wird. Auch wird durch die obere Spannrolle 24, die über die Flanke 22 mit dem oberen Führungsvorsprung 20 zusammenwirkt eine Kraftkomponente in Richtung auf die Tragrollen und/oder Antriebsrollen und insbesondere in Richtung auf die Zahnscheibe erzeugt. Eine sichere Kämmung des Zahnriemens 16 mit der Zahnscheibe 17 wird erreicht.

Bei den in Figur 2 dargestellten Ausführungsbeispiel ist der Führungsvorsprung 19 separat zum Zahnriemen 16 auf der Innenseite 15 des Endlosgurtes 11 angeordnet. Bei dem im Figur 3 dargestellten Ausführungsbeispiel ist der untere Führungsvorsprung 19 einstückig mit dem Zahnriemen 16 ausgebildet. Dabei ist zwischen dem Zahnriemen 16 und dem Führungsvorsprung 19 eine Nut 25 vorhanden, die die Verzahnung von dem Führungsvorsprung 19 trennt. Dadurch wird erreicht, dass der Führungsvorsprung 19 elastisch mit dem Zahnriemen 16 verbunden ist, so dass Spannungsspitzen gut abgebaut werden können.

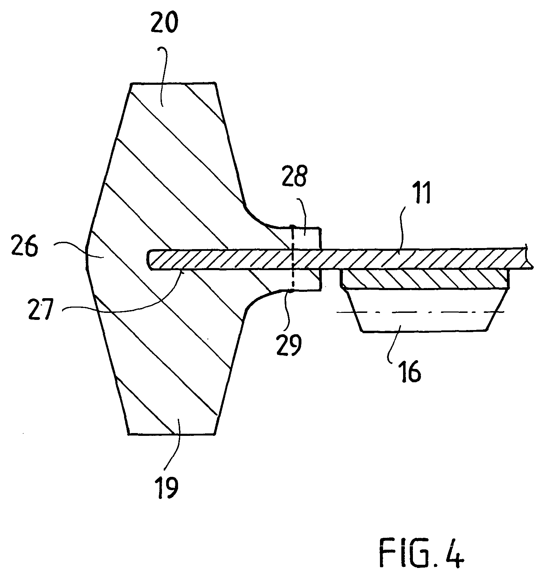

Bei dem in Figur 4 dargestellten Ausführungsbeispiel ist der untere Führungsvorsprung und der obere Führungsvorsprung einstückig ausgebildet. Das den oberen Führungsvorsprung 20 und unteren Führungsvorsprung 19 umfassende Bauteil 26 weist eine parallel zur Flachseite des Endlosgurtes 11 verlaufende Nut 27 auf, in die der Endlosgurt mit seinem äußeren Randbereich eingesteckt werden kann. Das Bauteil 26 erstreckt sich mit einem Flansch 28 dabei weiter nach innen, so dass ausreichend Raum für eine Befestigung, beispielsweise für eine durchgehende Naht 29 vorhanden ist. Dieses Bauteil kann weiterhin auch einstückig mit dem Zahnriemen entsprechend Figur 3 ausgebildet sein.

in der Zeichnung sind Ausführungsformen mit oberen und unteren Führungsvorsprüngen gezeigt. Es kann aber auch vorgesehen werden, dass nur ein oberer Führungsvorsprung vorhanden ist. Bei schrägstehender Spannrolle wird der Endlosgurt außen gehalten und nach unten auf die Tragrollen gedrückt. Ein Abheben des Endlosgurtes im äußeren Bereich und somit des Zahnriemens wird zuverlässig vermieden. Bei der Verwendung eines Führungsvorsprungs nur auf der inneren Flachseite des Endlosgurtes muss dafür gesorgt werden, dass die Spannrollen den Endlosgurt nicht von den Tragrollen wegdrücken. Hier kann der Führungsvorsprung eine Hinterschneidung aufweisen, in die ein entsprechender radialer Vorsprung der Spannrolle eingreift oder umgekehrt.

Die in der Zeichnung dargestellte Anordnung von Führungsvorsprüngen am äußersten Randbereich des Endlosgurtes in radialer Richtung mit Bezug auf die Kurve hat den Vorteil, dass zum einen die Spannrollen 24 sehr weit außen liegen können. Die für den Transport der Gegenstände zur Verfügung stehende Bereite des Kurvengurtes wird somit erhöht. weiterhin besteht der Vorteil darin, dass der Zahnriemen 16 stets unter einer definierten Spannung in radialer Richtung quer zu seiner Längserstreckung gehalten wird, so dass ein einwandfreies Kämmen mit der Zahnscheibe gewährleistet ist. Es können entlang dem Kurvenverlauf mehrere Spannrollen und mehrere Tragrollen entsprechend der Belastung und der Größe des Kurvengurtes vorgesehen werden. Weiterhin kann vorgesehen werden, dass die Spannrollen und/oder die Flanken elastisch beschichtet sind, um einen ruhigen und verschleißarmen Lauf des Kurvengurtes zu bewirken.

Der Kurvengurt der oben erläuterten At kann auf einen Kurvenförderer eingesetzt werden, der mit einer Vielzahl von Spannrollen, die oberhalb oder unterhalb oder jeweils paarweise oberhalb und unterhalb des Untertrums und/oder des Obertrums des Kurvengurts angeordnet sind, sowie mit wenigstens einem Zahnrad oder Zahnkranz, das in den Zahnriemen des Kurvengurts eingreift versehen ist. Das Zahnrad oder der Zahnkranz liegt dabei in radialer Richtung der Kurve weiter innen als die mit dem oder den Führungsvorsprüngen des Kurvegurts zusammenwirkenden Umfangsflächen der Spannrollen. Vorzugsweise ist das Zahnrad oder der Zahnkranz Bestandteil einer Tragrolle und insbesondere einer endständigen Tragrolle.

Zwischen den Antriebsrollen und Tragrollen können nicht gezeigte Gleittische vorhanden sein, deren Oberfläche bündig mit der oberen Umfangsfläche der Trag- und Antriebsrollen abschließt und auf denen sich der Endlosgurt bei Belastung abstützt. Im Bereich des Zahnriemens weisen diese Gleittische entsprechende Aussparung auf oder sind in radialer Richtung entsprechend weniger lang ausgebildet. Damit wird ein sicher Antrieb zum einen und ein sichere Lastabstützung zum anderen erreicht.

## Patentansprüche

1. Kurvengurt für einen Bandförderer mit einem um winklig zueinander angeordnete Antriebs- und/oder Tragrollen (12, 13, 14) geführten Endlosgurt (11), der zumindest auf seiner der Tragseite abgekehrten inneren Flachseite (15) mit wenigstens einem Zahnriemen (16) verbunden ist, der mit wenigstens einer Zahnscheibe (17) zum Antreiben des Endlosgurtes kämmt, welcher Endlosgurt zumindest auf der äußeren Flachseite (21) mit wenigstens einem Führungsvorsprung (20) vorsehen ist, der sich entlang des Endlosgurtes erstreckt und an dem Spannrollen (24) angreifen, um den Endlosgurt auf den Tragrollen (12, 13, 14) zu halten, **dadurch gekennzeichnet, dass** der Führungsvorsprung (20) in radialer Richtung der Kurve weiter außen liegt als der Zahnriemen (16).

2. Kurvengurt für einen Bandförderer mit einem um winklig zueinander angeordnete Antriebs- und/oder Tragrollen (12, 13, 14) geführten Endlosgurt (11), der zumindest auf seiner der Tragseite abgekehrten inneren Flachseite (15) mit wenigstens einem Zahnriemen (16) verbunden ist, der mit wenigstens einer Zahnscheibe (17) zum Antreiben des Endlosgurtes kämmt, welcher Endlosgurt zumindest auf der inneren Flachseite (15) mit wenigstens einem Führungsvorsprung (19) vorsehen ist, der sich entlang des Endlosgurtes erstreckt und an dem Spannrollen (24) angreifen, um den Endlosgurt auf den Tragrollen (12, 13, 14) zu halten, **dadurch gekennzeichnet, dass** der Führungsvorsprung (19) in radialer Richtung der Kurve weiter außen liegt als der Zahnriemen (16).

3. Kurvengurt nach Anspruch 1 oder 2, **dadurch gekennzeichnet, dass** Führungsvorsprünge (19, 20) auf beiden Flachseiten (15, 21) des Endlosgurtes (11) angeordnet sind.

4. Kurvengurt nach einem der Ansprüche 1 bis 3, **dadurch gekennzeichnet, dass** der oder die Führungsvorsprünge (19, 20) am radial äußeren Randbereich des Endlosgurtes (11) angeordnet sind.

5. Kurvengurt nach einem der Ansprüche 1 bis 4, **dadurch gekennzeichnet, dass** der Führungsvorsprung (19) mit einem relativ zur Breite des Endlosgurtes geringen Abstand zum Zahnriemen (16) verläuft oder unmittelbar an diesen anschließt.

6. Kurvengurt nach einem der Ansprüche 1 bis 4, **dadurch gekennzeichnet, dass** der Führungsvorsprung (19) mit dem Zahnriemen (16) einstückig ausgebildet ist.

7. Kurvengurt nach Anspruch 6, **dadurch gekennzeichnet, dass** zwischen Führungsvorsprung und Verzahnung des Zahnriemens eine Nut (25) entlang der Längserstreckung des Zahnriemens verläuft.

8. Kurvengurt nach einem der Ansprüche 1 bis 7, **dadurch gekennzeichnet, dass** die Führungsvorsprünge (19, 20) auf der äußeren und inneren Flachseite des Endlosgurtes einstückig ausgebildet sind.

9. Kurvengurt nach einem der Ansprüche 1 bis 8, **dadurch gekennzeichnet, dass** der Führungsvorsprung (19) auf der inneren Flachseite des Endlosgurtes eine Flanke (23) aufweist, an der die Spannrollen (24) angreifen und die in einem Winkel zwischen 30° und 90° zur Flachseite des Endlosgurtes verläuft.

10. Kurvengurt nach einem der Ansprüche 1 bis 9, **dadurch gekennzeichnet, dass** der Führungsvorsprung (20) auf der äußeren Flachseite des Endlosgurtes eine Flanke (22) aufweist, an der die Spannrollen (24) angreifen und die in einem Winkel zwischen 0° und 90° zur Flachseite des Endlosgurtes verläuft.

11. Kurvengurt nach einem der Ansprüche 9 oder 10, **dadurch gekennzeichnet, dass** die Flanken (22, 23) der Führungsvorsprünge (20, 19) symmetrisch zum Endlosgurt ausgerichtet sind.

12. Kurvengurt nach einem der Ansprüche 1 bis 9, **dadurch gekennzeichnet, dass** der Führungsvorsprung eine gekrümmte und insbesondere ballige Seitenfläche aufweist, an der die Spannrollen angreifen.

13. Kurvengurt nach einem der Ansprüche 12, **dadurch gekennzeichnet, dass** die Seitenflächen der Führungsvorsprünge symmetrisch zum Endlosgurt ausgerichtet sind.

14. Kurvengurt nach einem der Ansprüche 1 bis 13, **dadurch gekennzeichnet, dass** der Führungsvorsprung (20) auf der äußeren Flachseite des Endlosgurtes dem Führungsvorsprung (19) auf der inneren Flachseite gegenüberliegt.

15. Kurvengurt nach einem der Ansprüche 1 bis 14, **dadurch gekennzeichnet, dass** der Führungsvorsprung auf der äußeren Flachseite des Endlosgurtes zu dem Führungsvorsprung auf der inneren Flachseite versetzt verläuft.

16. Kurvengurt nach einem der Ansprüche 2 bis 15, **dadurch gekennzeichnet, dass** der Führungsvorsprung auf der äußeren Flachseite des Endlosgurtes zumindest teilweise dem Zahnriemen gegenüberliegt.

17. Kurvenförderer für einen Kurvengurt gemäß einem oder mehreren der vorhergehenden Ansprüche mit einer Vielzahl von Spannrollen, die oberhalb oder unterhalb oder jeweils paarweise oberhalb und unterhalb des Untertrums und/oder des Obertrums des Kurvengurts angeordnet sind, sowie mit wenigstens einem Zahnrad oder Zahnkranz, das in den Zahnriemen des Kurvengurts eingreift, **dadurch gekennzeichnet, dass** das Zahnrad oder der Zahnkranz in radialer Richtung der Kurve weiter innen liegt als die mit dem oder den Führungsvorsprüngen des Kurvegurts zusammenwirkenden Umfangsflächen der Spannrollen.

18. Kurvenförderer nach Anspruch 17, **dadurch gekennzeichnet, dass** das Zahnrad oder der Zahnkranz Bestandteil einer Tragrolle und insbesondere einer endständigen Tragrolle ist.
